Europäisches Patentamt

**European Patent Office**

Office européen des brevets

(11) Numéro de publication: **0 067 730**
**A1**

## (12) DEMANDE DE BREVET EUROPEEN

(21) Numéro de dépôt: **82400851.0**

(22) Date de dépôt: **07.05.82**

(51) Int. Cl.³: **H 01 R 13/453**
**A 47 J 37/12**

(30) Priorité: **04.06.81 FR 8111057**

(43) Date de publication de la demande:
**22.12.82 Bulletin 82/51**

(84) Etats contractants désignés:
**BE DE GB IT NL**

(71) Demandeur: **DE DIETRICH & Cie, Société dite**

**F-67110 Niederbronn-Les-Bains(FR)**

(72) Inventeur: **Sigwalt, Paul**
**31, rue des Prémontrés**
**F-67500 Haguenau(FR)**

(74) Mandataire: **Polus, Camille et al,**
**c/o Cabinet Lavoix 2, Place d'Estienne d'Orves**
**F-75441 Paris Cedex 09(FR)**

(54) **Friteuse électrique.**

(57) Friteuse électrique du type comportant un caisson (1) sur lequel est fixée une table (2) en tôle émaillée ou inoxydable, qui sert de support à un bac amovible (3) recevant la friture et à un bandeau de commande (5) amovible, destiné au réglage de l'élément chauffant (6) qui plonge dans le bac (3) et qui est relié à un câble d'alimentation extérieur (9) par l'intermédiaire d'un dispositif de connexion électrique débrochable, dont une partie (13) est solidaire du bandeau (5) et dont une autre partie complémentaire (11) est montée sur le caisson (1) et pourvue d'un cache mobile la rendant automatiquement inaccessible, lorsque le bandeau de commande (5) est enlevé de la table (2).

FIG. 1

Croydon Printing Company Ltd.

## Friteuse électrique.

La présente invention est relative à une friteuse électrique encastrable du type comportant un caisson sur lequel est fixée une table en tôle émaillée ou inoxydable, servant de support à un bac amovible recevant la friture, et un ensemble amovible d'un élément chauffant plongeant dans le bac et d'un bandeau de commande raccordé à un câble d'alimentation extérieur pour l'alimentation de cet ensemble chauffant.

Une telle friteuse est déjà connue et elle présente l'avantage de pouvoir être vidangée relativement facilement puisque le bac contenant la friture peut être enlevé de son caisson. Cette particularité est évidemment très pratique lorsque la friteuse est encastrée dans un plan de travail, puisqu'elle évite de monter un robinet de vidange dans le fond du bac.

Pour rendre le bac amovible, il faut que le bandeau ainsi que l'élément chauffant soient séparables du caisson. Cependant, comme le bandeau doit être raccordé à un câble électrique destiné à être connecté à son tour à une source d'alimentation telle que le secteur, il faut pour enlever le bac, tirer le câble du caisson sur une certaine longueur.

En outre, il faut prévoir une réserve de câble en-dessous du plan de travail de la cuisine, car pour des questions d'échauffement, cette réserve ne peut être logée dans le caisson.

La présente invention a pour but de fournir une friteuse électrique du type indiqué ci-dessus et dépourvue des inconvénients des friteuses antérieures.

Elle a donc pour objet une friteuse telle que définie ci-dessus qui est caractérisée en ce qu'entre le bandeau et le câble d'alimentation est prévu un dispositif de connexion électrique débrochable dont une partie est solidaire du bandeau et dont une autre partie complémentaire est montée sur le caisson et pourvue d'un cache mobile la rendant automatiquement inaccessible lorsque le

2

bandeau est séparé du caisson.

L'invention est exposée ci-après plus en détail à l'aide de dessins représentant seulement un mode d'éxécution. Sur ces dessins :

- la Fig.1 est une vue en perspective éclatée d'une friteuse réalisée suivant le mode d'éxécution préféré de l'invention;

- la Fig.2 montre une vue partielle en élévation et en coupe du dispositif de connexion électrique débrochable juste avant que le bandeau soit placé dans le caisson;

- la Fig.3 analogue à la Fig.2 montre ce même dispositif de connexion lorsque le bandeau est en place dans le caisson;

- la Fig.4 montre une vue en perspective du cache utilisé dans le dispositif de connexion électrique débrochable;

- la Fig.5 est une vue en perspective éclatée d'un autre mode de réalisation de l'invention.

Suivant l'exemple d'éxécution représenté aux figures, la friteuse de l'invention est du type encastrable et elle est donc placée dans un plan de travail P comme cela est maintenant courant dans les agencements de cuisine modernes.

Cette friteuse comporte un caisson 1 ouvert vers le haut où il comprend une table 2 sur laquelle repose un bac 3 destiné à contenir la friture.

La table 2 comporte une portion de tôle de support 4 qui s'étend horizontalement vers l'avant à partir du bord supérieur du petit côté avant de la table pour servir au montage d'un bandeau de commande 5 qui est amovible. Un élément chauffant 6 est raccordé à ce bandeau de commande et plonge dans le bac 3.

Le bandeau de commande 5 est pourvu d'un bouton de réglage 7 d'un thermostat (non visible sur le dessin) et d'une lampe témoin 8 du fonctionnement de l'élément

3

chauffant 6, d'autres organes de commande pouvant par ailleurs, être prévus.

Le bandeau de commande 5 peut être relié à une source d'alimentation extérieure telle que le secteur, par l'intermédiaire d'un câble d'alimentation 9 qui traverse le fond du caisson et qui, suivant l'invention, est relié à un dispositif 10 de connexion débrochable.

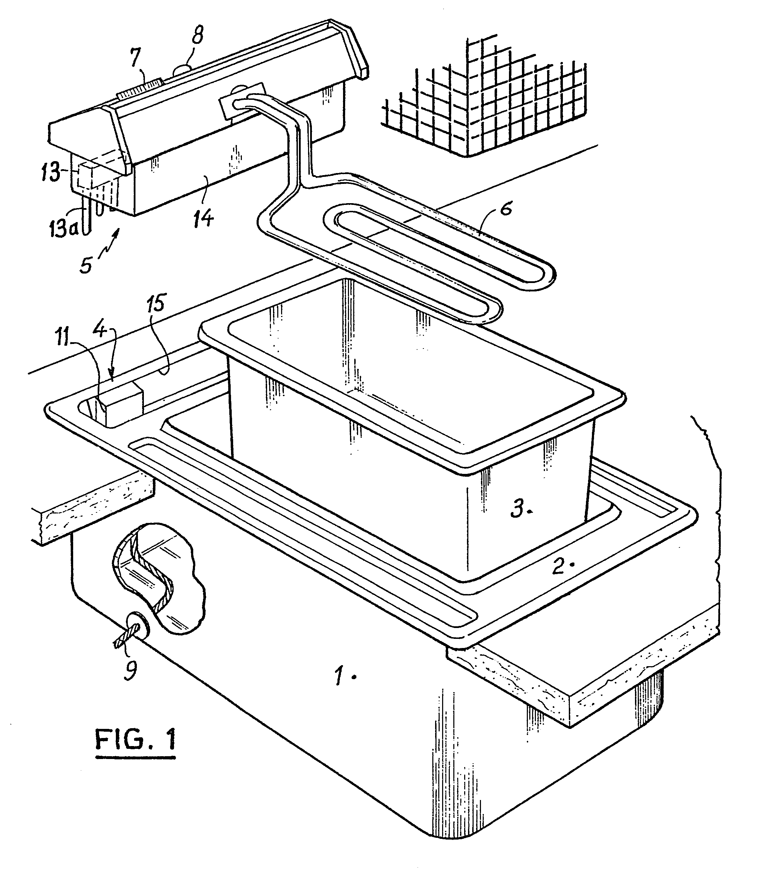

Ce dispositif comprend une prise bipolaire 11 avec connexion de terre reliée au câble 9 et fixée sur une console 12 solidaire de la paroi avant du caisson 1. Cette prise coopère avec une fiche bipolaire 13 avec connexion de terre 13a qui est montée à l'intérieur d'un boîtier 14 en tôle du bandeau 5. Ce boîtier s'ajuste dans une ouverture rectangulaire 15 (Fig.1) ménagée dans la portion de tôle 4 de la partie avant de la table 2 de manière à faciliter la mise en place du bac et l'alignement de la prise et de la fiche du dispositif 10 de connexion débrochacle.

La fiche 13 est montée entre les branches d'un étrier 16 fixé sous le boîtier 14 et dont les ailes 16a et 16b constituent des rampes 17 destinées à coopérer avec des butées 18a et 18b d'un cache mobile 19 lors de la mise en place du bandeau dans la portion de tôle 4.

Ce cache 19 qui présente également une forme d'étrier est articulé par ces ailes sur la console 12 à l'aide d'une broche 20 dont l'axe est à peu près horizontal et parallèle au côté avant du caisson 1. L'âme 21 de l'étrier ou cache 19 comporte un prolongement 22 plié à l'équerre et s'étendant à peu près verticalement vers le bas lorsque le cache est relevé. Les butées 18a et 18b sont obtenues par découpe et repliage de deux languettes marginales de l'âme 21 de l'étrier ou cache 19.

Un ressort de rappel 23 est accroché à la paroi avant du caisson 1 et à une barrette transversale 24 montée entre les ailes du cache 19. Aux extrémités de ces ailes sont prévus des ergots de butée 25 coopérant avec

4

des butées fixes correspondantes 26 solidaires de la paroi avant du caisson 1.

Le fonctionnement est le suivant.

A partir de la position de la Fig.1, le bac 3 est descendu dans le caisson 1 en étant guidé par le bord intérieur de la table 2 puis on peut placer le bandeau 5 dans l'ouverture 15 de la table 2, l'élément chauffant 6 descendant dans le bac 3.

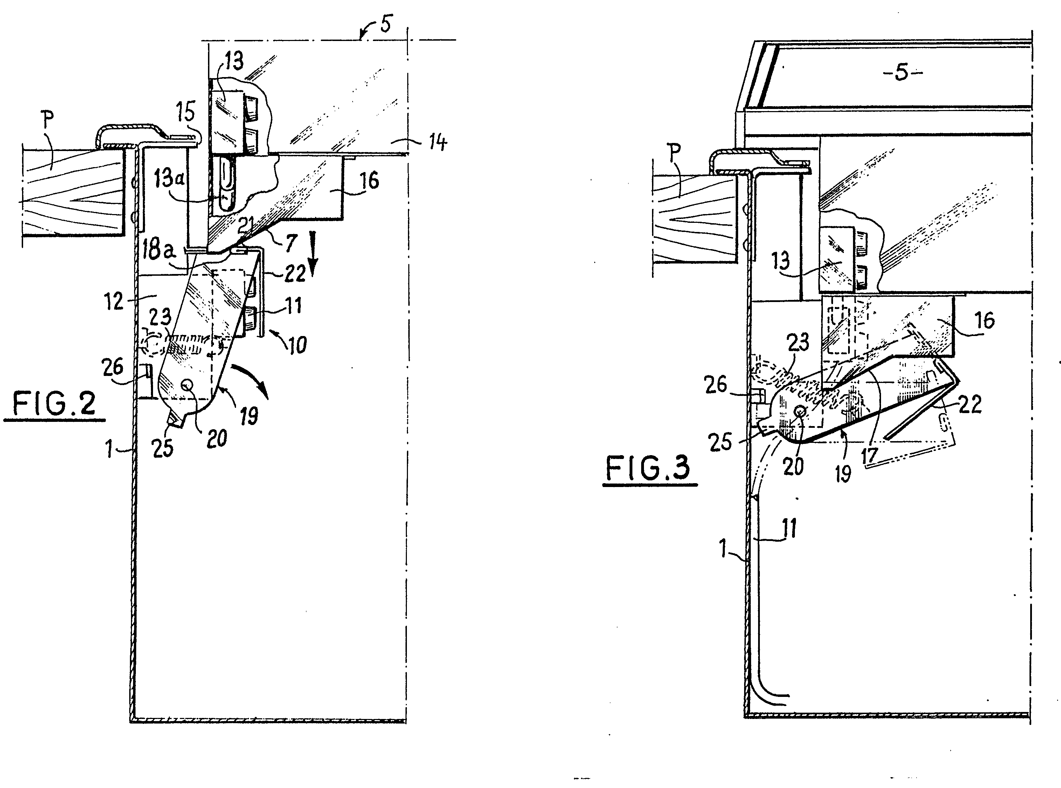

Lorsque le bandeau atteint la position de la Fig.2, les rampes 17 de l'étrier 16 viennent en contact avec les butées 18a et 18b respectives, ce qui amorce un mouvement de basculement du cache 19. Comme on peut le constater, ce dernier et le prolongement 22 recouvraient auparavant entièrement la prise 11 garantissant ainsi la sécurité de l'utilisateur.

Le mouvement de descente du bac 3 se poursuivant, le cache bascule davantage ce qui découvre la prise 11 et permet d'y engager la fiche 13, ce qui établit la connexion électrique du bandeau 5 avec le câble 9. On notera que la broche de terre 13a de la fiche 13 étant plus longue que les autres broches destinées à être portées à la tension d'alimentation de l'élément chauffant , on obtient au cours de la mise en place du bandeau 5, tout d'abord une liaison avec la masse et ensuite seulement une connexion avec les conducteurs sous tension. Cette disposition améliore donc également la sécurité d'utilisation.

Les ergots 25 et les butées 26 évitent que le cache 19 puisse être basculé au-delà d'une position limite (représentée en pointillés sur la Fig.3).

On voit par ailleurs que lorsque le bac est enlevé, il devient totalement indépendant du caisson 1 et peut donc très facilement être transporté vers un évier ou autre pour la vidange et le nettoyage.

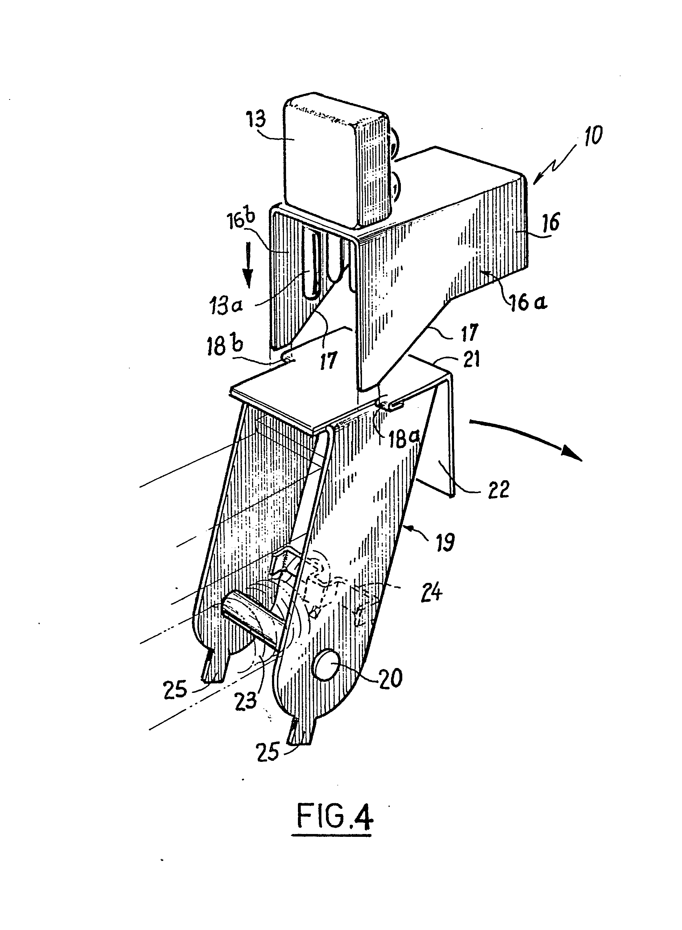

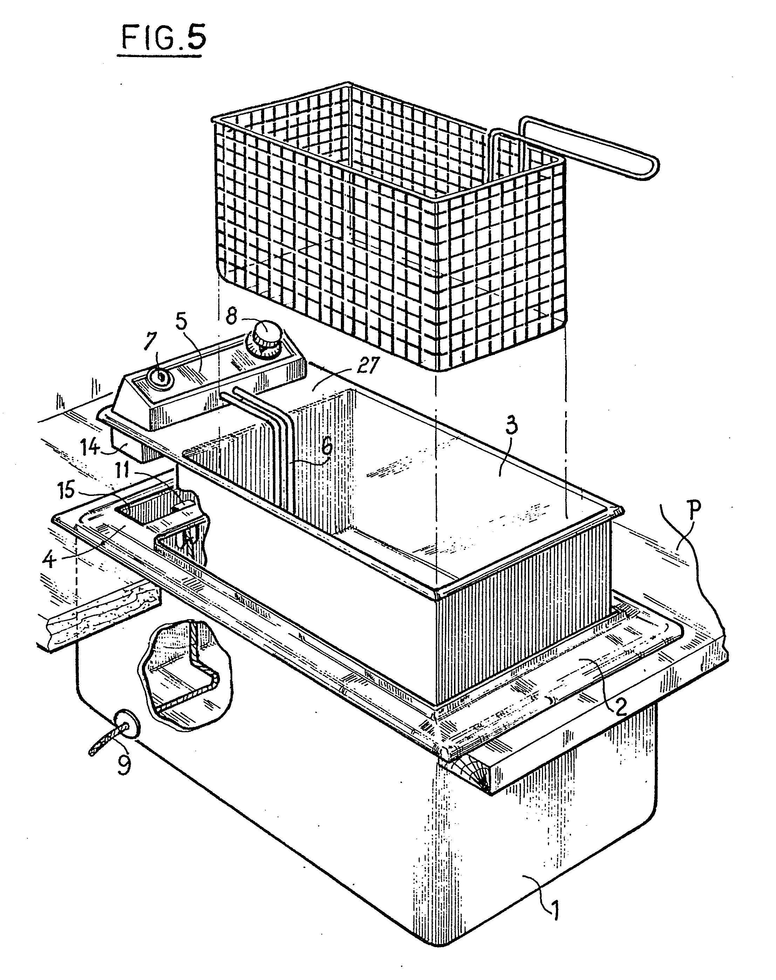

La Fig.5 montre une variante de réalisation dans laquelle il est prévu une friteuse selon l'invention qui est analogue à celle des précédentes figures, à cela près

5

que le bandeau 5 est solidaire du bac 3 qui comporte à cet effet, une portion de tôle horizontale 27 servant à supporter le bandeau 5. Ainsi, l'ensemble peut être enlevé d'un seul tenant du caisson 1. La connexion entre le bandeau 5 et le câble d'alimentation est ici assurée par un dispositif de connexion débrochable identique à celui représenté en détail sur les Fig.2 à 4.

6

REVENDICATIONS

1. Friteuse électrique encastrable du type comportant un caisson (1) sur lequel est fixée une table (2) en tôle émaillée ou inoxydable, servant de support à un bac amovible (3) recevant la friture, et un ensemble amovible d'un élément chauffant (6) plongeant dans le bac (3) et d'un bandeau de commande (5) raccordé à un câble d'alimentation extérieure (9) pour l'alimentation de cet élément chauffant (6), caractérisée en ce qu'entre le bandeau (5) et le câble d'alimentation (9) est prévu un dispositif de connexion électrique débrochable (10) dont une partie (13) est solidaire du bandeau (5) et dont une autre partie complémentaire (11) est montée sur le caisson (1) et pourvue d'un cache mobile (19) la rendant automatiquement inaccessible lorsque le bandeau (5) est sépraé du caisson (1).

2. Friteuse suivant la revendication 1, caractérisée en ce que le dispositif (12) de connexion débrochable comporte une prise (11) et une fiche (13) solidaire l'une du caisson (1) et l'autre du bac (3) ou inversément.

3. Friteuse suivant l'une quelconque des revendications 1 et 2, caractérisée en ce que le cache (19) est monté articulé sur le caisson (1) et rabattable à l'encontre de l'action d'un ressort (23) pour démasquer la partie correspondante (11) du dispositif (10) de connexion électrique grâce à au moins une rampe (17) prévue sur le bac (3).

4. Friteuse suivant la revendication 3, caractérisée en ce que ledit cache (19) présente la forme d'un étrier articulé sur un axe horizontal, en ce que le dispositif (10) de connexion débrochable est manoeuvré verticalement et en ce que la ou lesdites rampes (17) agissent sur des moyens de butée (18a,18b) prévus sur l'âme (21) de l'étrier du cache (19).

5. Friteuse suivant l'une quelconque des revendications 1 à 4, caractérisée en ce que l'une des parties

7

(prise 11) du dispositif (10) de connexion débrochable est montée sous la table (2) de support du bac (3) devant une ouverture (15) ménagée dans cette table (2) pour recevoir la partie inférieure (14) du boîtier du bandeau de commande (5).

6. Friteuse selon la revendication 5, caractérisée en ce que le bandeau de commande (5) et l'élément chauffant (6) forment une unité séparable du bac (3) recevant la friture.

7. Friteuse suivant la revendication 5, caractérisée en ce que le bandeau de commande (5), l'élément chauffant (6) ainsi que le bac recevant la friture (3) forment un ensemble séparable du caisson (1) et en ce qu'à cet effet, le bac (3) présente une portion de tôle horizontale (27) pour le montage du bandeau de commande.

8. Friteuse suivant l'une quelconque des revendications 2 à 7, caractérisée en ce que ledit dispositif (10) de connexion débrochable est bipolaire avec connexion de terre et en ce que ladite fiche (13) comporte une broche de terre (13a) dont la longueur dépasse celle des broches destinées à être portées à la tension d'alimentation de l'élément chauffant (6).

FIG. 1

FIG.2

P

13

15

13a

14

16

21

18a

7

12

22

23

11

26

10

19

25

20

1

FIG.3

-5-

P

13

23

16

26

25

20

19

17

22

1

11

2/4

0067730

FIG.4

FIG.5

0067730

Office européen
des brevets

RAPPORT DE RECHERCHE EUROPEENNE

Numéro de la demande

EP 82 40 0851

## DOCUMENTS CONSIDERES COMME PERTINENTS

| Categorie | Citation du document avec indication. en cas de besoin, des parties pertinentes | Revendication concernee | CLASSEMENT DE LA DEMANDE (Int. Cl. 3) |
|---|---|---|---|
| A | US-A-2 805 314 (GENERAL ELECTRIC) * figure 3; colonne 2, ligne 53 à colonne 3, ligne 50 * | 1,6,7 | H 01 R 13/453 A 47 J 37/12 |
| A | US-A-3 941 043 (JENN AIR CORP.) * figures 2,3; colonne 2, lignes 11 à 43 * | 1,2,5, 6,7,8 | |
| A | US-A-3 159 344 (WILSON METAL PROD.) * figure 1; colonne 3, lignes 30 à 49; colonne 4, lignes 14 à 22 * | 1,5 | |
| A | GB-A- 463 277 (W. SANDERS & CO.) * figures 1,3; page 2, lignes 77 à 95 * | 1,3,4 | DOMAINES TECHNIQUES RECHERCHES (Int. Cl. 3) |
| A | GB-A- 439 161 (R. TURNER WAITE) * figures 2,4; page 1, colonne 2, lignes 63 à 90 * | 1 | H 01 R 13/00 A 47 J 37/00 H 05 B 3/00 |

Le present rapport de recherche a ete etabli pour toutes les revendications

| Lieu de la recherche | Date d achevement de la recherche | Examinateur |
|---|---|---|
| LA HAYE | 20-07-1982 | WAERN G.M. |